# EUROPÄISCHE PATENTSCHRIFT

(11) **EP 0 784 522 B1**
(45) Veröffentlichungstag und Bekanntmachung des Hinweises auf die Patenterteilung: **04.12.2002**
(21) Anmeldenummer: 96925652.8
(22) Anmeldetag: 03.07.1996
(51) Int. Cl.: B21D 47/00, B61D 17/00, B61F 1/00, B23K 33/00

(54) **FLÄCHENBAUTEIL**
SURFACE COMPONENT
COMPOSANT DE SURFACE

(30) Priorität: 04.08.1995 DE 19528610
(43) Veröffentlichungstag der Anmeldung: 23.07.1997
(73) Patentinhaber: Siemens AG, 80506 München (DE)
(72) Erfinder: HOLZ, Rüdiger, D-82237 Wörthsee (DE)
(74) Vertreter: Zedlitz, Peter, Dipl.-Inf.
(86) Internationale Anmeldenummer: EP9602916
(87) Internationale Veröffentlichungsnummer: WO97005974

(56) Entgegenhaltungen:
- EP-A- 0 379 310
- DE-A- 3 309 736
- FR-A- 2 348 007
- US-A- 3 639 106

## Beschreibung

Die Erfindung bezieht sich auf ein Flächenbauteil, gemäß Oberbegriff des Anspruchs 1.

Bei der Erstellung von Flächenbauteilen dieser Art ist es bekannt, die Beblechung mit unterbrochenen Kehlnähten am Profilschenkel anzuschweissen, um die sich an der Außenseite der Beblechung abzeichnenden Einfallstellen der Schweißnähte so klein wie möglich zu halten. Dabei ergibt sich der Nachteil, daß sich über die gesamte Länge der Profilschenkel Doppelungen zwischen dem Profilschenkel und der Beblechung ergeben, die aus Korrosionsgründen mit Dichtmasse gut abgedichtet werden müsssen. Dabei ist es schwierig, sicherzustellen, daß sämtliche von der Doppelung betroffenen Bereiche vollständig abgedichtet werden können. Im weiteren ergibt sich der Nachteil, daß die Formgenauigkeit der Beblechung an den Stellen der durchgehenden und in Teilbereichen mit Schweißnähten versehenen Blechdoppelungen durch Richtmaßnahmen sehr schwierig und oftmals nur unzulänglich durchzuführen ist.

Der Erfindung liegt daher die Aufgabe zugrunde, ein Flächenbauteil der vorbeschriebenen Art so zu verbessern, daß auf ein Abdichten von unterbrochenen Schweißnähten vollständig oder weitestgehend verzichtet werden kann und die Richtmöglichkeiten zur Erstellung einer exakten Formgenauigkeit der Beblechung erheblich verbessert werden können.

Diese Aufgabe wird durch die im Anspruch 1 gekennzeichnete Erfindung gelöst.

Es sind zwar grundsätzlich schon Profile bekannt, bei denen im Bereich der Beblechung Ausschnitte angeordnet sind, diese Ausschnitte stellen jedoch lediglich Durchbrüche für kreuzende Profile dar. Die Erfindung hingegen geht von der Erkenntnis aus, daß durch die in den nicht verschweißten Bereichen der Profilschenkel vorgesehenen Ausschnitte zum einen keine Blechdoppelungen mehr zwischen Profilschenkel und Beblechung gegeben sind und zum anderen die zwischen den Ausschnitten gelegenen, mit der Beblechung verschweißten Profilschenkelbereiche wesentlich leichter gerichtet werden können als dies bei durchgehenden Profilschenkeln der Fall ist. Die Beblechung kann dabei auch durch die Ausschnitte von innen gerichtet werden. Die Lage der Schweißnahtabschnitte ist durch die auf der Beblechung anliegenden Teilbereiche der Profilschenkel vorgegeben, so daß sich das aufwendige Ausmessen und Aufzeichnen der Schweißnahtabschnitte erübrigt. Die Schweißnähte können dabei so erstellt werden, daß sich jegliche Abdichtungsmaßnahmen erübrigen. Durch die nur abschnittsweise gegebene Verbindung mit den durch die Ausschnitte geschaffenen weiten Durchbrüchen in den Profilen werden Wärmebrücken durch die Profile nach innen wesentlich verringert. Die Luft in der Wärmeisolierung der Wand kann wegen der durch die Ausschnitte geschaffenen Durchbrüche im Profil besser zirkulieren, wodurch Schwitzwasser vermieden werden kann. Durch die nur abschnittsweise Verbindung des Profils und durch die Vermeidung von Blechdoppelungen in den nicht verschweißten Profilbereichen wird überdies die Schallübertragung von der Beblechung über die Profile zur Innenwandverkleidung wesentlich verringert.

In einer bevorzugten Ausführungsform sind die Profile so ausgebildet, daß die zwischen den senkrecht zur Beblechung stehenden Profilstegen und der Beblechung gelegenen Profilschenkel mit den senkrecht stehenden Profilstegen einen Winkel einschließen, der größer als 90° ist. Durch diese winkelige Anordnung lassen sich die Profilschenkel beim Richten der Beblechung besonders leicht sowohl von innen als auch von außen verbiegen.

Vorzugsweise sind dabei die Stirnkanten der Teilabschnitte der Profilschenkel mit der Beblechung mittels einer Kehlnaht verschweißt, wodurch bei besonders leichter und effektiver Richtbarkeit sichergestellt ist, daß durch die Schweißmaßnahmen keinerlei Hohlraumeinschlüsse oder Blechdoppelungen auftreten können.

Die Erfindung ist in der Zeichnung dargestellt und im folgenden näher beschrieben. Es zeigen:
- Fig. 1: ein Teilstück eines Flächenbauteils mit an der Innenseite der Beblechung abschnittsweise verschweißten, sich kreuzenden Profilen,
- Fig. 2: ein Teilstück eines Profils,
- Fig. 3: den Querschnitt durch das Profil nach Fig. 2 mit Beblechung,
- Fig. 4: den Querschnitt durch eine an der Auführungsform eines Profils und
- Fig. 5: den Querschnitt durch eine weitere Ausführungsform eines Profils.

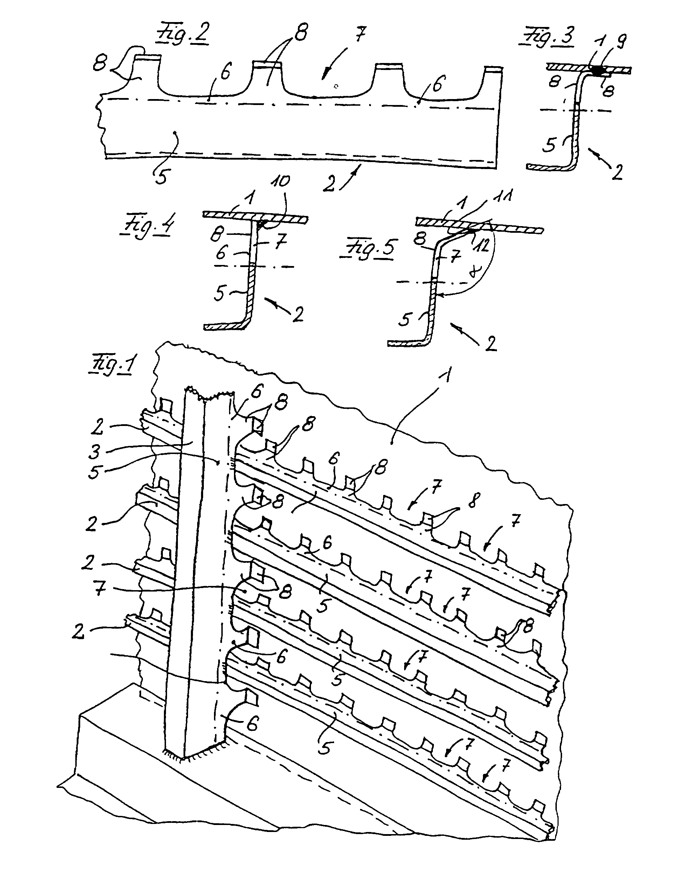

Das in Fig. 1 dargestellte Flächenbauteil besteht aus einer Beblechung 1 an deren Innenseite horizontal verlaufende Profile 2 und ein diese kreuzendes senkrechtes Profil 3 verschweißt sind. Die Beblechung 1 und das Profil 3 sind mit einem nicht näher dargestellten Untergestell 4 des Wagenkastens eines Schienenfahrzeugs, beispielsweise einer Lokomotive, verschweißt. Die Profile 2 und 3 weisen einen zur Beblechung 1 senkrecht stehenden Profilsteg 5 auf, der in einen Profilschenkel 6 übergeht, mit denen die Profile 2 und 3 mit der Beblechung 1 verschweißt sind. Der Profilsteg 5 und der Profilschenkel 6 sind in der Zeichnung durch eine strichpunktierte Linie voneinander getrennt. Die Profilschenkel 6 sind mit Ausschnitten 7 vesehen, zwischen denen Teilabschnitte 8 verbleiben, mit denen die Profile 2 und 3 mit der Beblechung 1 verschweißt sind. Die Ausschnitte 7 können bis in den Bereich der Profilstege 5 gehen.

Das in den Fig. 2 und 3 dargestellte Profil 2 verdeutlicht, daß der Profilschenkel 6 im wesentlichen nur noch aus den Teilabschnitten 8 besteht. Diese mit der Beblechung 1 verschweißten Teilabschnitte 8 geben dieser zum einen ausreichende Stabiltät zum anderen sind sie jedoch im Vergleich zu einem nicht mit Ausschnitten versehenen Profil leicht verformbar, so daß Richtarbeiten von beiden Seiten der Beblechung 1 leicht durchgeführt werden können.

Bei der aus der Fig. 3 zu ersehenden Verbindung des Teilabschnitts 8 an der Beblechung 1 mittels einer Punktschweißung 9 ist zu ersehen, daß Blechdoppelungen weitestgehend vermieden sind.

Bei dem in Fig. 4 dargestellten Profil liegen der Profilsteg 5 und der Profilschenkel 6 in einer zur Beblechung 1 senkrechten Ebene. Der Teilabschnitt 8 des Profilschenkels 6 steht ebenfalls senkrecht zur Beblechung 1 und ist mit dieser mittels einer Kehlschweißnaht 10 verbunden.

Bei dem in Fig. 5 dargestellten Profil sind der Profilsteg 5 und der Profilschenkel 6 in einem Winkel α zueinander angeordnet, der größer als 90° ist. Durch die Abwinkelung ist zum einen eine besonders gute Verformbarkeit zu Richtzwecken gegeben, zum anderen kann die Stirnkante 11 des Profilschenkels 6 mit der Beblechung 1 mittels einer Kehlschweißnaht 12 verschweißt werden, bei der Blechdoppelungen und sonstige Hohlraumeinschlüsse vollkommen ausgeschlossen werden können.

## Patentansprüche

1. Flächenbauteil, insbesondere tragende Wandstruktur der Wagenkästen von Schienenfahrzeugen, mit einer Beblechung und mit diese versteifenden Profilen, die mindestens einen zur Beblechung im wesentlichen senkrecht stehenden Profilsteg aufweisen, wobei die an der Beblechung liegenden Profilschenkel der Profile in Teilabschnitten mit der Beblechung verschweißt sind, **dadurch gekennzeichnet, daß** die Profile (2,3) zumindest an den Profilschenkeln (6) Ausschnitte (7) aufweisen und die Profile (2,3) mit den zwischen den Ausschnitten (7) liegenden Teilabschnitten (8) der Profilschenkel (6) mit der Beblechung verschweißt sind.

2. Flächenbauteil nach Anspruch 1, **dadurch gekennzeichnet, daß** die Profile (2,3) beim Übergang von den zur Beblechung (1) senkrecht stehenden Profilstegen (5) zu der Beblechung (1) abgewinkelte Profilschenkel (6) aufweisen, die mit den Profilstegen (5) einen Winkel α einschließen, der größer als 90° ist.

3. Flächenbauteil nach Anspruch 2, **dadurch gekennzeichnet, daß** die Stirnkanten (11) der Teilabschnitte (8) mit der Beblechung (1) mittels einer Kehlnaht (12) verschweißt sind.

## Claims

1. Surface building component, in particular a load-bearing wall structure of the superstructure of rail vehicles, comprising metal sheeting and sections, which brace the latter and comprise at least one section web lying substantially perpendicular to the metal sheeting, wherein the section limbs of the sections abutting the metal sheeting are welded in sub-portions to the metal sheeting, **characterized in that** the sections (2, 3) have cutouts (7) at least in the section limbs (6) and the sections (2, 3) are welded by the sub-portions (8) of the section limbs (6) lying between the cutouts (7) to the metal sheeting.

2. Surface building component according to claim 1, **characterized in that** the sections (2, 3) at the transition from the sections webs (5), which lie perpendicular to the metal sheeting (1), to the metal sheeting (1) have section limbs (6), which are bent at an angle and with the section webs (5) include an angle α, which is greater than 90°.

3. Surface building component according to claim 2, **characterized in that** the front edges (11) of the sub-portions (8) are welded to the metal sheeting (1) by means of a fillet weld (12).

## Revendications

1. Elément de surface, notamment structure de paroi porteuse de la caisse de véhicules ferroviaires, comprenant un tôlage et des profilés renforçant ce tôlage, qui comportent au moins une âme de profilé essentiellement perpendiculaire au tôlage, les branches des profilés qui s'appliquent contre le tôlage étant assemblées par soudage au tôlage dans des régions partielles, **caractérisé en ce que** les profilés (2, 3) comportent au moins sur les branches (6) de profilé des découpures (7), et les profilés (2, 3) sont assemblés par soudage au tôlage par les régions partielles (8), situées entre les découpures (7), des branches (6) de profilé.

2. Elément de surface suivant la revendication 1, **caractérisé en ce que** les profilés (2, 3) comportent, à la transition entre le tôlage (1) et les âmes (5) de profilé perpendiculaires au tôlage (1), des branches (6) de profilé coudées qui forment avec les âmes (5) de profilé un angle α qui est supérieur à 90°.

3. Elément de surface suivant la revendication 2, **caractérisé en ce que** les bords (11) frontaux des régions (8) partielles sont assemblées par soudage au tôlage (1) au moyen d'une soudure (12) d'angle.
